# DEMANDE DE BREVET EUROPEEN

(11) **EP 4 703 566 A1**
(43) Date de publication de la demande: **04.03.2026**
(21) Numéro de dépôt: 25198420.9
(22) Date de dépôt: 27.08.2025
(51) Int. Cl.: F01D 17/14, F02C 7/232, F02C 9/16, F02C 9/18, F02C 9/26

(54) **TURBOMACHINE ÉQUIPÉE D'UNE VANNE DE RÉGULATION SONIQUE POUR FLUIDE À L'ÉTAT GAZEUX**

(30) Priorité: 29.08.2024 BE 202405578
(71) Demandeur: Safran Aero Boosters, 4041 Herstal (BE)
(72) Inventeur: CARRE, Alexandre Guillaume, 4041 Herstal (BE); PEIFFER, Philippe José, 4041 Herstal (BE); COLLET, Maxime Jean-Michel, 4041 Herstal (BE)
(74) Mandataire: Gevers Patents

(57) **Abrégé**

L'invention concerne une turbomachine d'aéronef comprenant une vanne (1) de régulation de fluide à l'état gazeux, ladite vanne (1) comprenant :
- un corps (11) de vanne comprenant un canal (20) d'écoulement du fluide, ledit canal (20) comprenant une portion axiale (25) s'étendant le long d'un axe principal (200), ladite portion axiale (25) présentant une zone (10) de section transversale réduite pour obtenir une vitesse sonique dudit fluide ;
- un membre (13) de vanne mobile dans le canal (20) d'écoulement le long dudit axe principal (200), entre une position ouverte et une position fermée dans laquelle le membre (13) obture au moins partiellement l'écoulement du fluide au niveau de ladite zone (10) de section transversale réduite ;
- un actionneur (12) pour engendrer un déplacement du membre (13) de vanne entre la position ouverte et la position fermée ; et
- un moyen (9) de guidage pour guider le déplacement du membre (13)
de vanne dans le canal (20) ;
le canal (20) comprenant en outre une entrée (6) en communication fluidique avec ladite portion axiale (25) par une portion courbe (28) ; le moyen (9) de guidage étant situé en aval de ladite zone (10) de section transversale réduite, le long d'un sens d'écoulement du fluide lors d'une utilisation normale de la vanne (1).

## Description

### Domaine technique

L'invention porte sur une turbomachine équipée d'une vanne de régulation sonique pour fluide à l'état gazeux, conçue pour être utilisée dans le domaine aéronautique. L'invention porte également sur ladite vanne.

### Art antérieur

Dans le domaine aéronautique, la gestion précise des fluides est un aspect critique du fonctionnement des systèmes de propulsion. A cette fin, la stabilité du débit est primordiale et est assuré par l'introduction d'un blocage sonique de l'écoulement rendant ce débit indépendant de la pression en aval de la vanne. On définit un écoulement sonique comme celui d'un fluide se déplaçant à la vitesse du son. Comme la pression en amont est le seul paramètre influençant la mesure du débit, les variations de pression qui peuvent survenir en aval de la vanne sont sans effet sur le passage du fluide. Ainsi, le flux n'est pas perturbé par ces fluctuations, ce qui permet un contrôle plus optimal et précis. Ce contrôle amélioré permet de concevoir des systèmes plus robustes et réduit les risques de défaillances mécaniques.
Historiquement, des vannes à écoulement coudé ont été employées pour cette tâche. Cependant, ces systèmes présentent des inconvénients, notamment une stabilité qui n'est pas « naturellement » assurée, nécessitant ainsi des ajustements entraînant la conception de vannes plus coûteuses et encombrantes. En effet, la stabilité du débit souhaitée est obtenue à des rapports de pression aval/amont supérieurs à 0,8, ce qui est difficilement réalisable pour des vannes coudées. Par conséquent, il est essentiel de développer une solution améliorée de régulation sonique du fluide.

### Exposé de l'invention

Un objet de l'invention est de fournir une turbomachine comprenant une vanne de régulation de fluide à l'état gazeux, offrant une bonne stabilité de débit, une meilleure précision et des pertes de charge réduites.

A cet effet, il est proposé une turbomachine d'aéronef comprenant une vanne de régulation de fluide à l'état gazeux, la vanne comprenant :
- un corps de vanne comprenant un canal d'écoulement du fluide, le canal comprenant une portion axiale s'étendant le long d'un axe principal, la portion axiale présentant une zone de section transversale réduite pour obtenir une vitesse sonique du fluide ;
- un membre de vanne mobile dans le canal d'écoulement le long de l'axe principal, entre une position ouverte et une position fermée dans laquelle le membre obture au moins partiellement l'écoulement du fluide au niveau de la zone de section transversale réduite;
- un actionneur pour engendrer un déplacement du membre de vanne entre la position ouverte et la position fermée ; et
- un moyen de guidage pour guider le déplacement du membre de vanne dans le canal ;
le canal comprenant en outre une entrée en communication fluidique avec la portion axiale par une portion courbe ;
caractérisée en ce que le moyen de guidage est situé en aval de ladite zone de section transversale réduite, le long d'un sens d'écoulement du fluide lors d'une utilisation normale de la vanne.

La turbomachine selon l'invention présente plusieurs avantages. La turbomachine comprend une vanne conçue pour optimiser la stabilité, et la précision grâce à son écoulement axial dirigé vers la zone de section transversale réduite. Cette conception permet au fluide de circuler de manière plus linéaire et uniforme, ce qui facilite un contrôle plus précis du débit. De plus, la vanne permet de minimiser les perturbations qui peuvent survenir lors de changements brusques de direction, comme c'est souvent le cas avec les vannes conventionnelles à écoulement coudé. Par ailleurs, la vanne assure un écoulement stable du fluide, grâce à la portion courbe du canal. Cela permet au fluide d'arriver dans la portion axiale de manière progressive avec un écoulement plus uniforme dont les perturbations sont minimales (pas de décollement et pertes de charge de réduites). Grâce à cette conception, la vanne permet d'atteindre un rapport de pressions aval/amont supérieur à 0.8. Par ailleurs, le moyen de guidage est situé en aval de la zone de section transversale réduite, le long d'un sens d'écoulement du fluide lors d'une utilisation normale de la vanne. Cela signifie qu'il se trouve dans la portion du canal où le fluide a déjà traversé la zone étroite et continue son écoulement dans une partie plus large vers une sortie du canal. Avantageusement, cela permet de reprendre efficacement le porte à faux induit et minimise l'interférence avec le fluide dans la zone où il est le plus critique. La zone de section transversale réduite est conçue pour optimiser le débit et la gestion des vitesses du fluide ; ainsi, tout dispositif de guidage situé en amont pourrait perturber l'écoulement et altérer les performances.

Comme le comprendra l'homme de métier, une « zone de section transversale réduite » est une partie de la portion axiale du canal où la section à travers laquelle le fluide s'écoule est réduite. En d'autres termes, c'est une région avec une section plus petite que celle des portions avant et après cette zone. Dans le contexte des vannes de régulation de fluides, cette conception est souvent utilisée pour créer des effets spécifiques sur l'écoulement du fluide. Dans un régime subsonique, c'est-à-dire lorsque la vitesse d'écoulement est inférieure à celle du son, jusqu'au point où elle devient sonique, un fluide qui traverse une zone à section transversale réduite subit une augmentation de vitesse et une diminution de pression. Ce comportement est expliqué par les équations qui régissent les écoulements fluides. De préférence, ce terme peut être substitué de « col ».

Comme le comprendra l'homme de métier, « l'axe principal » est une droite fictive servant de référence pour définir un sens d'extension d'une portion (axiale) du canal.

L'usage, dans ce document, du verbe « comprendre », de ses variantes, et ses conjugaisons, ne peut en aucune façon exclure la présence d'éléments autres que ceux mentionnés. De même, l'usage, dans ce document, de l'article indéfini « un », « une », ou de l'article défini « le », « la » ou « l'», pour introduire un élément n'exclut pas la présence d'une pluralité de ces éléments.

Dans un autre mode de réalisation, le membre de vanne est formé d'une tige reliée à un obturateur ayant une forme effilée. L'obturateur est la partie du membre de vanne permettant d'obturer l'écoulement du fluide au niveau de la section transversale réduite. L'obturateur est conçu avec une forme effilée incluant des formes aérodynamiques pour minimiser les pertes de charges (perturbations) et optimiser l'écoulement du fluide ainsi que de permettre la stabilité mécanique de l'ensemble. La tige permet un contrôle précis de la position de l'obturateur, facilitant des ajustements fins du débit de fluide. Chaque position de l'obturateur se traduit par une valeur du débit de fluide circulant dans le canal, augmentant ainsi la précision de la régulation.

De préférence, l'obturateur a une forme d'ogive. Une ogive est généralement une forme allongée et effilée, souvent décrite comme ayant une section transversale en forme de cône tronqué. Avantageusement, la forme d'ogive est aérodynamiquement optimisée pour minimiser les instabilités (pertes de charge) dans le fluide. La transition en douceur et le profil effilé permettent au fluide de s'écouler plus uniformément autour de l'obturateur, réduisant ainsi les perturbations qui peuvent générer des pertes de charge importantes. Par ailleurs, la forme d'ogive permet une régulation précise du flux et offre une flexibilité dans l'adaptation de la vanne à différentes conditions de fonctionnement.

Dans un mode de réalisation, le moyen de guidage comprend des patins de guidage répartis angulairement et uniformément autour de l'axe principal. La répartition angulaire et uniforme des patins de guidage assure que le membre de vanne est maintenu en position stable tout au long de son déplacement. Cette disposition évite le balancement ou le désalignement du membre, ce qui garantit une régulation plus précise et un fonctionnement plus stable de la vanne.

De préférence, les patins de guidage sont en nombre de trois. Les patins forment ainsi un triangle équilatéral assurant une répartition uniforme des forces appliquées sur le membre de vanne.

Dans un mode de réalisation, les patins de guidage sont alignés le long de l'axe principal. Avantageusement, l'alignement longitudinal des patins évite, les complications d'un montage hyperstatique, où trop de points de support répartis le long de l'axe, peuvent causer des contraintes additionnelles. Cette approche aide à éviter les problèmes d'alignement et de déformations. De plus, cette configuration permet de faciliter le montage et la maintenance du moyen de guidage au niveau de la vanne.

Dans un autre mode de réalisation, les patins de guidage comprennent chacun une surface configurée pour épouser au moins localement une courbure de l'obturateur. Avantageusement cela permet de distribuer les forces de manière plus homogène sur chacun des patins de guidage ce qui contribue à une meilleure fiabilité et à une performance plus stable.

Dans un mode de réalisation, chacun des patins de guidage est adapté pour coulisser dans une rainure du corps de vanne, pendant le déplacement du membre de vanne. Cela offre un guidage linéaire précis du membre de vanne. Cela permet un mouvement contrôlé et stable, réduisant les risques de déviation ou de désalignement pendant l'ouverture ou la fermeture de la vanne, à travers l'empêchement de la rotation du membre de vanne autour de l'axe principal (anti-rotation).

De préférence, le corps de vanne comprend outre une butée pour limiter le coulissement des patins de guidage. Avantageusement, cette butée permet de limiter de manière précise le coulissement des patins de guidage, lors de l'ouverture ou de la fermeture de la vanne. Cette limitation empêche tout mouvement excessif, assurant ainsi que le membre de vanne reste dans la position désirée, ce qui améliore la précision du fonctionnement.

Dans un mode de réalisation, l'actionneur est situé en amont de la zone de section transversale réduite et configuré pour coopérer avec la tige. Pour un positionnement précis, cette configuration doit inclure une conception intégrée permettant de réduire et de maitriser les jeux entre pièces du mécanisme. Avantageusement, le positionnement aligné avec l'axe principal, permet d'apporter ces requis lors des phases de conception. De plus, la proximité de l'actionneur avec la tige réduit les temps de réponse entre le signal de commande et le mouvement réel de l'obturateur, améliorant ainsi la réactivité de la vanne.

La présente invention a également pour objet une vanne de régulation de fluide à l'état gazeux, comprenant :
- un corps de vanne comprenant un canal d'écoulement du fluide, ledit canal comprenant une portion axiale s'étendant le long d'un axe principal, ladite portion axiale présentant une zone de section transversale réduite pour obtenir une vitesse sonique dudit fluide ;
- un membre de vanne mobile dans le canal d'écoulement le long dudit axe principal, entre une position ouverte et une position fermée dans laquelle le membre obture au moins partiellement l'écoulement du fluide au niveau de ladite zone de section transversale réduite ;
- un actionneur pour engendrer un déplacement du membre de vanne entre la position ouverte et la position fermée ; et
- un moyen de guidage pour guider le déplacement du membre de vanne dans le canal ;
le canal comprenant en outre une entrée en communication fluidique avec ladite portion axiale par une portion courbe ;
caractérisée en ce que le moyen de guidage est situé en aval de ladite zone de section transversale réduite, le long d'un sens d'écoulement du fluide lors d'une utilisation normale de la vanne.

Une telle vanne est avantageusement utilisable dans une turbomachine selon l'invention.

### Brève description des figures

D'autres caractéristiques et avantages de la présente invention apparaîtront à la lecture de la description détaillée qui suit, pour la compréhension de laquelle on se reportera aux figures annexées, parmi lesquelles :
- La Figure 1 illustre un schéma de principe de l'installation d'une vanne pour une turbomachine selon un mode de réalisation possible de l'invention,
- La Figure 2 illustre une vue partielle en coupe longitudinale d'une vanne pour une turbomachine selon un mode de réalisation de l'invention,
- La Figure 3 illustre une vue en coupe transversale de la vanne de la figure 2, montrant un moyen de guidage pour guider le déplacement du membre de vanne dans le canal.

Les dessins des figures ne sont pas à l'échelle. Des éléments semblables sont en général dénotés par des références semblables dans les figures. Dans le cadre du présent document, les éléments identiques ou analogues peuvent porter les mêmes références. En outre, la présence de numéros ou lettres de référence aux dessins ne peut être considérée comme limitative, y compris lorsque ces numéros ou lettres sont indiqués dans les revendications.

### Description détaillée de certains modes de réalisation de l'invention

Cette partie présente une description détaillée de certains modes de réalisation de la présente invention. Cette dernière est décrite avec des réalisations particulières et des références à des figures mais l'invention n'est pas limitée par celles-ci. En particulier, les dessins et les figures décrits ci-dessous ne sont que schématiques et ne sont pas limitants.

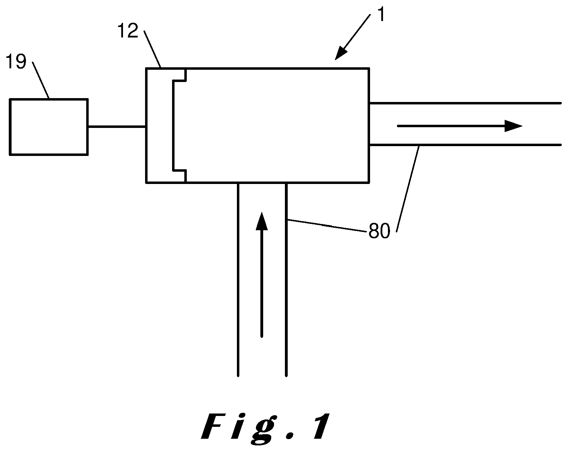

La figure 1 montre une vanne 1 de turbomachine, installée dans un conduit 80 permettant l'entrée et la sortie de fluide. La vanne 1 est conçue pour permettre un écoulement sonique, garantissant un contrôle efficace du débit dans ces conditions particulières. La vanne 1 comprend un actionneur 12, responsable de l'ouverture et de la fermeture de la vanne pour contrôler le débit du fluide. De préférence, l'actionneur 12 est électrique. Avantageusement, les actionneurs électriques permettent des réglages très précis du membre de vanne. Les moteurs électriques peuvent être contrôlés avec une grande exactitude, offrant un meilleur positionnement et donc une meilleure régulation du flux de fluide. Les actionneurs électriques peuvent être intégrés avec des systèmes de contrôle numérique (contrôleurs PID), permettant une gestion de l'ouverture et fermeture moyennant une conception incluant la réduction et la maitrise des jeux entre pièces.
De préférence, un contrôleur électronique 19 est couplé électroniquement à l'actionneur 12, pour assurer un contrôle précis et automatisé de la vanne 1 en fonction des paramètres de régulation programmés.

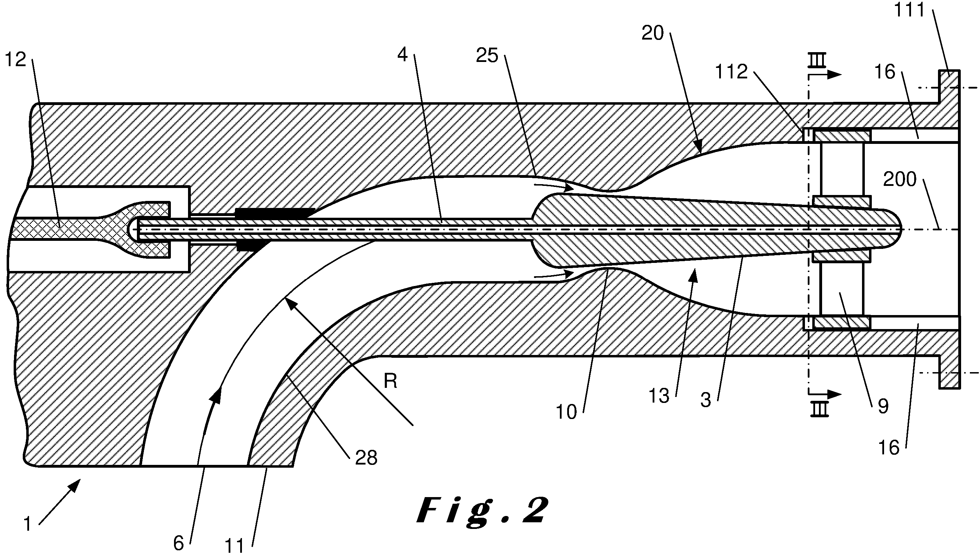

La figure 2 illustre une vue en coupe longitudinale brisée (II-II) d'une vanne 1 de régulation de fluide à l'état gazeux. De préférence, la vanne 1 est adaptée pour fonctionner en hydrogène gazeux.

La vanne 1 comprend un corps 11 de vanne, le corps 11 de vanne comprenant un canal 20 d'écoulement du fluide, le canal 20 comprenant une portion axiale 25 s'étendant le long d'un axe principal 200, la portion axiale 25 présentant une zone 10 de section transversale réduite pour obtenir une vitesse sonique du fluide. La portion axiale 25 de préférence comprend une partie convergente avant la zone 10 et une partie divergente située après cette zone 10. Cette conception permet de réduire progressivement puis d'élargir progressivement la section transversale du canal 20 où le fluide passe. Par exemple, pour l'hydrogène à l'état gazeux, la vitesse sonique est nettement élevée et peut atteindre 1 270 mètres par seconde, à température ambiante (environ 20°C ou 68°F). Le canal 20 comprend en outre une entrée 6 en communication fluidique avec la portion axiale 25 par une portion courbe 28. La portion courbe 28 du canal 20 n'est pas simplement un angle ou une courbe abrupte, mais plutôt une transition douce et progressive qui relie l'entrée 6 à la portion axiale 25. Cette forme est conçue pour réduire les pertes de charge et éviter les décollements. Avantageusement, un rayon R de courbure plus grand assure une transition plus douce pour le fluide, réduisant ainsi le risque d'instabilités qui peuvent conduire à des pertes de charge. La portion courbe 28 peut être distincte ou réalisée en une seule partie avec la portion axiale 25.
De préférence, le corps 11 de la vanne comprend en outre une bride 111 s'étendant autour de l'axe principal 200. La bride 111 assure que la vanne est correctement positionnée le long de l'axe principal lors de son installation au niveau d'un conduit. Cela réduit le besoin de manipulations supplémentaires pour obtenir l'alignement correct de la vanne. En fournissant un point de référence fixe pour le placement de la vanne, la bride 111 réduit les risques d'erreurs humaines lors de l'installation, ce qui garantit une précision constante. La bride 111 peut inclure des logements pour agencer des éléments de fixation en vue de l'installation de la vanne 1.

La vanne 1 comprend en outre un membre de vanne 13 mobile dans le canal 20 d'écoulement le long de l'axe principal 200, entre une position ouverte et une position fermée dans laquelle le membre obture au moins partiellement l'écoulement du fluide au niveau de la zone 10 de section transversale réduite. De préférence, le membre 13 de vanne est formé d'une tige 4 reliée à un obturateur 3 ayant une forme effilée. Lorsque l'obturateur 3 est en position complètement ouverte, il est positionné de manière à ne pas interférer significativement avec l'écoulement du fluide au niveau de la zone 10 de section transversale réduite. Cela permet au fluide de passer librement, avec peu d'obstruction, facilitant ainsi un débit maximal à travers la vanne 1. En se déplaçant axialement vers la position fermée, l'obturateur 3 commence à réduire progressivement la zone effective par laquelle le fluide peut passer. En diminuant l'ouverture, l'obturateur 3 permet de contrôler finement le débit du fluide. Cette position est ajustable, ce qui permet à l'opérateur de régler précisément le débit selon les besoins spécifiques du processus. De préférence, l'obturateur 3 a une forme d'ogive. L'ogive est caractérisée par une forme conique allongée avec un sommet arrondi. Cette forme est sélectionnée afin de réduire la résistance du fluide lorsqu'elle se déplace à travers celui-ci. La transition entre le diamètre maximal de l'obturateur 3 et son sommet est progressive. Cela aide à minimiser les perturbations dans le flux de fluide et à éviter la création d'instabilités excessives tout en offrant une progressivité répondant au requis de précision du débit.

La vanne 1 comprend en outre un actionneur 12 (seule la sortie de l'actionneur 12 est illustrée) pour engendrer un déplacement du membre 13 de vanne entre la position ouverte et la position fermée. De préférence, l'actionneur 12 est électrique. De préférence, l'actionneur 12 est situé en amont de la zone 10 de section transversale réduite, et configuré pour coopérer avec la tige 4. Un moteur de l'actionneur 12 est, de préférence, aligné suivant l'axe principal 200. Le moteur peut actionner un système de transmission tel que des engrenages, des vis sans fin, ou des systèmes à vis à billes qui convertissent le mouvement rotatif en mouvement linéaire, nécessaire pour déplacer la tige 4 du membre de vanne 13.

Comme illustré à la figure 2, la sortie de l'actionneur 12 est de préférence directement connectée à la tige 4. Cette connexion peut être réalisée par un couplage direct, où l'extrémité de l'actionneur se fixe à la tige 4 avec des attaches ou des boulons. Lorsque la vanne 1 doit être fermée, l'actionneur 12 exerce une force qui tire la tige 4 vers la zone 10 de section transversale réduite. Cela fait reculer l'obturateur 3 réduisant ainsi l'espace par lequel le fluide peut passer ou le bloquant complètement. Pour ouvrir la vanne 1, l'actionneur 12 exerce une force en sens inverse, poussant la tige 4 dans la direction opposée, ce qui déplace l'obturateur 3 vers une position où il libère l'espace permettant au fluide de circuler à travers le canal.

La vanne 1 comprend en outre un moyen de guidage 9 pour guider le déplacement du membre de vanne 13 dans le canal 20. Le moyen de guidage 9 est situé en aval de la zone 10 de section transversale réduite, le long d'un sens d'écoulement du fluide lors d'une utilisation normale de la vanne 1. De préférence, le moyen de guidage 9 comprend des patins de guidage 90 répartis uniformément et angulairement autour de l'axe principal 200. De préférence, les patins de guidage 90 sont alignés le long de l'axe principal 200. De préférence, chacun des patins de guidage 90 est adapté pour coulisser dans une rainure 16 du corps 11 de vanne, pendant le déplacement du membre 13 de vanne. De préférence, le corps 11 de vanne comprend en outre une butée pour limiter le coulissement des patins de guidage 90. Par exemple, Cette butée est formée par un épaulement 112 du corps 11 de vanne. Cet épaulement 112 permet de limiter le coulissement des patins de guidage 90, de sorte à arrêter le déplacement du membre 13 de vanne dans la position fermée. La butée peut être également formée par un flasque (non représenté) du corps 11 de vanne. Ce flasque permet de limiter le coulissement des patins de guidage 90 dans le sens inverse, de sorte à arrêter le déplacement du membre 13 de vanne dans la position ouverte. De préférence, le flasque est fixé au niveau de la bride 111, ce qui permet également d'assurer l'étanchéité à la vanne 1. Un joint d'étanchéité peut ainsi être interposé entre le flasque et la bride 111.

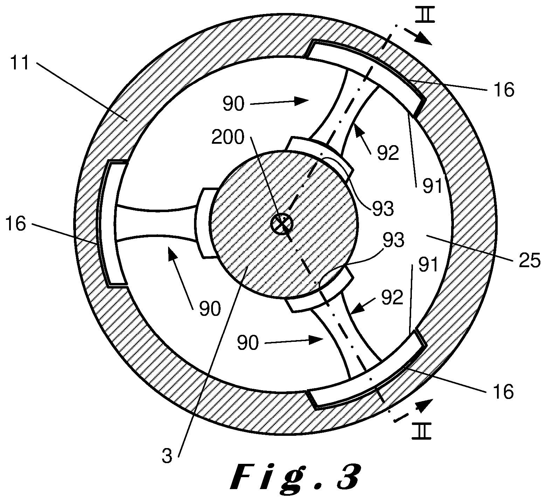

La figure 3 illustre une vue en coupe transversale (III- III) de la vanne 1 décrite à la figure 2, montrant en détail le moyen de guidage 9. De préférence, le moyen de guidage 9 comprend trois patins de guidage 90 répartis uniformément et angulairement autour de l'axe principal 200. Les trois patins de guidage 90 sont typiquement placés à 120 degrés l'un de l'autre autour de l'axe principal 200. Cette disposition symétrique assure une distribution équilibrée des forces autour de l'obturateur 3, contribuant à une meilleure stabilité et un meilleur alignement du membre de vanne 13 pendant son mouvement.

De préférence, les patins de guidage 90 comprennent chacun une surface 93 configurée pour épouser au moins localement une courbure de l'obturateur 3. Cela signifie que chaque patin de guidage 90 est spécifiquement conçu pour s'adapter à la forme externe de l'obturateur 3, facilitant ainsi un mouvement fluide et stable. De préférence, la surface 93 est concave pour épouser la courbure convexe d'un obturateur 3 en forme d'ogive. Cela permet une surface de contact maximale, ce qui est essentiel pour un guidage précis.

De préférence, les patins de guidage 90 comprennent chacun une base 91 destinée à coulisser dans une rainure 16 du corps 11 de vanne. Chaque rainure 16 est conçue avec une profondeur adaptée à l'épaisseur de la base 91 de chaque patin de guidage 90. Ce dimensionnement est essentiel pour garantir un appui stable et uniforme des patins de guidage 90 dans les rainures 16, assurant ainsi un déplacement linéaire du membre 13 de vanne. En plus de l'épaisseur de la base 91, la profondeur de la rainure 16 peut prendre en compte l'ajout d'une surface glissante (non représentée), telle qu'un revêtement en polymère. Ce revêtement permet de réduire les frottements entre la base 91 du patin de guidage 90 et la paroi de la rainure 16. Cela se traduit par un mouvement plus fluide du membre 13 de vanne, nécessitant moins de force pour être actionné, ce qui améliore l'efficacité globale de la vanne 1.

De préférence, chacun des patins de guidage 90 comprend un corps 92 principal relié à la base 91. Le corps principal doit offrir un équilibre entre flexibilité et rigidité. Il doit être assez flexible pour absorber et amortir les vibrations, tout en étant suffisamment rigide pour maintenir l'alignement précis de la surface 93 par rapport à l'obturateur 3. La forme du corps principal 92 peut être aérodynamiquement conçue pour minimiser la résistance au flux de fluide autour du patin de guidage 90, améliorant ainsi l'efficacité de la vanne 1. Grâce à cette conception, les patins de guidage 90 permettent d'assurer le maintien mécanique, le guidage, l'anti-rotation et le positionnement précis du membre 13 de vanne.

En résumé, l'invention concerne une turbomachine comprenant une vanne 1 de régulation de fluide à l'état gazeux. La vanne 1 est conçue pour offrir une meilleure stabilité de débit, une précision accrue et des pertes de charge réduites. La vanne 1 comprend un corps 11 doté d'un canal 20 d'écoulement de fluide avec une portion axiale 25 le long d'un axe principal 200, où une zone 10 de section transversale réduite permet d'atteindre une vitesse sonique du fluide. Un membre 13 de vanne mobile, guidé le long de cet axe 200, peut occuper une position ouverte ou fermée pour réguler l'écoulement. L'invention optimise l'écoulement axial, réduisant les instabilités et assurant un contrôle précis du débit, augmentant ainsi l'efficacité du système.

## Revendications

1. Turbomachine d'aéronef comprenant une vanne (1) de régulation de fluide à l'état gazeux, ladite vanne (1) comprenant :
- un corps (11) de vanne comprenant un canal (20) d'écoulement du fluide, ledit canal (20) comprenant une portion axiale (25) s'étendant le long d'un axe principal (200), ladite portion axiale (25) présentant une zone (10) de section transversale réduite pour obtenir une vitesse sonique dudit fluide ;
- un membre (13) de vanne mobile dans le canal (20) d'écoulement le long dudit axe principal (200), entre une position ouverte et une position fermée dans laquelle le membre (13) obture au moins partiellement l'écoulement du fluide au niveau de ladite zone (10) de section transversale réduite ;
- un actionneur (12) pour engendrer un déplacement du membre (13) de vanne entre la position ouverte et la position fermée ; et
- un moyen (9) de guidage pour guider le déplacement du membre (13) de vanne dans le canal (20) ;
le canal (20) comprenant en outre une entrée (6) en communication fluidique avec ladite portion axiale (25) par une portion courbe (28) ;
**caractérisée en ce que** le moyen (9) de guidage est situé en aval de ladite zone (10) de section transversale réduite, le long d'un sens d'écoulement du fluide lors d'une utilisation normale de la vanne (1).

2. Turbomachine d'aéronef selon l'une quelconque des revendications précédentes, **caractérisée en ce que** le membre (13) de vanne est formé d'une tige (4) reliée à un obturateur (3) ayant une forme effilée.

3. Turbomachine d'aéronef selon la revendication précédente, **caractérisée en ce que** l'obturateur (3) a une forme d'ogive.

4. Turbomachine d'aéronef selon l'une quelconque des revendications précédentes, **caractérisée en ce que** le moyen de guidage (9) comprend des patins de guidage (90) répartis angulairement et uniformément autour de l'axe principal (200).

5. Turbomachine d'aéronef selon la revendication précédente, **caractérisée en ce que** les patins de guidage (90) sont alignés le long dudit axe principal (200).

6. Turbomachine d'aéronef selon l'une des revendications 2 ou 3 et l'une des revendications 4 ou 5, **caractérisée en ce que** les patins de guidage (90) comprennent chacun une surface (93) configurée pour épouser au moins localement une courbure de l'obturateur (3).

7. Turbomachine d'aéronef selon l'une des revendications 4 à 6, **caractérisée en ce que** chacun des patins de guidage (90) est adapté pour coulisser dans une rainure (16) du corps (11) de vanne, pendant le déplacement du membre (13) de vanne.

8. Turbomachine d'aéronef selon la revendication précédente, **caractérisée en ce que** le corps (11) de vanne comprend en outre une butée pour limiter le coulissement des patins de guidage (90).

9. Turbomachine d'aéronef selon l'une quelconque des revendications précédentes, **caractérisée en ce que** l'actionneur (12) est situé en amont de la zone (10) de section transversale réduite, et configuré pour coopérer avec la tige (4).

10. Vanne (1) de régulation de fluide à l'état gazeux, comprenant :
- un corps (11) de vanne comprenant un canal (20) d'écoulement du fluide, ledit canal (20) comprenant une portion axiale (25) s'étendant le long d'un axe principal (200), ladite portion axiale (25) présentant une zone (10) de section transversale réduite pour obtenir une vitesse sonique dudit fluide ;
- un membre (13) de vanne mobile dans le canal (20) d'écoulement le long dudit axe principal (200), entre une position ouverte et une position fermée dans laquelle le membre (13) obture au moins partiellement l'écoulement du fluide au niveau de ladite zone (10) de section transversale réduite ;
- un actionneur (12) pour engendrer un déplacement du membre (13) de vanne entre la position ouverte et la position fermée ; et
- un moyen (9) de guidage pour guider le déplacement du membre (13) de vanne dans le canal (20) ;
le canal (20) comprenant en outre une entrée (6) en communication fluidique avec ladite portion axiale (25) par une portion courbe (28) ;
**caractérisée en ce que** le moyen (9) de guidage est situé en aval de ladite zone (10) de section transversale réduite, le long d'un sens d'écoulement du fluide lors d'une utilisation normale de la vanne (1).
